# NOUVEAU FASCICULE DE BREVET EUROPEEN

(11) **EP 3 953 163 B2**
(45) Date de publication et mention de la décision concernant l'opposition: **22.07.2026**
(45) Mention de la délivrance du brevet: 11.10.2023
(21) Numéro de dépôt: 20719741.9
(22) Date de dépôt: 09.04.2020
(51) Int. Cl.: B29D 30/02, B60C 7/22

(54) **BANDAGE PLEIN EN MATÉRIAU ÉLASTOMÈRE POUR GALET DE ROULEMENT DE TÉLÉPHÉRIQUE**
VOLLREIFEN AUS ELASTOMEREM WERKSTOFF FÜR EINE SEILBAHNROLLE
SOLID TYRE MADE OF ELASTOMER MATERIAL FOR A ROLLER OF A CABLE RAILWAY

(30) Priorité: 11.04.2019 FR 1903905
(43) Date de publication de la demande: 16.02.2022
(73) Titulaire: Compagnie Générale des Etablissements Michelin, 63000 Clermont-Ferrand (FR)
(72) Inventeur: SOUYRI, Philippe, 63040 Clermont-Ferrand Cedex 9 (FR); DEAN, David, 63040 Clermont- Ferrand Cedex 9 (FR)
(74) Mandataire: M.F.P. Michelin
(86) Numéro de dépôt international: PCT/IB2020/053400
(87) Numéro de publication internationale: WO 2020/208575

(56) Documents cités:
- EP-B1- 1 071 892
- WO-A1-2017/116384
- AT-B- 123 028
- AT-B- 325 354
- CH-A2- 709 957
- DE-A1- 2 353 270
- FR-A5- 2 106 897
- US-A- 4 295 686
- US-B2- 6 796 919

## Description

### DOMAINE TECHNIQUE DE L'INVENTION

La présente invention concerne un bandage plein en matériau élastomère pour galet de roulement de téléphérique, comprenant un corps massif en matériau élastomère.

### ETAT DE LA TECHNIQUE ANTERIEURE

Le transport de personnes par câble, par exemple à l'aide de moyens tels que les télésièges, télécabines ou téléphérique connait un développement important dans le secteur du transport urbain, avec des contraintes et besoins différents du transport de personnes en station de montagne.

Ce système de transport présente de nombreux avantages en zone urbaine. En effet, il est peu intrusif car l'emprise au sol est faible, ce qui est souvent critique en milieu urbain. Il est relativement silencieux en comparaison à une ligne de bus ou de tramway. Il est enfin non polluant car la motorisation est électrique. Ceci explique l'intérêt des organismes de transport de nombreuses agglomérations pour le transport par câble.

Parmi les critères qui sont déterminants dans le choix d'une solution de transport urbain, la capacité de transport maximale exprimée en personne / heure, est un critère très important. La capacité de transport est une association de différents paramètres tels que :
- la taille des cabines, capables d'embarquer chacune un nombre plus ou moins important de personnes. La masse globale de cabines et de leur chargement en personnes s'ajoute à la masse du câble dont le dimensionnement dépend aussi de la masse des cabines. Ainsi la charge à porter augmente globalement avec la taille des cabines.
- la densité des cabines, c'est-à-dire l'espacement entre deux cabines successives. Plus les cabines sont resserrées, plus la charge linéique est forte, et donc plus la charge à porter est importante.
- la vitesse de défilement du câble, qui définit le rythme de chargement-déchargement des cabines et détermine la capacité maximale de la ligne de téléphérique.

La masse globale d'une ligne de transport aérienne est supportée par une série de pylônes, comportant chacun un nombre plus ou moins important de galets. Chaque galet est recouvert d'une couche d'élastomère afin d'assurer un certain confort et pour préserver la structure du câble. En effet, le câble est un élément fondamental de la sécurité de ce type de moyen de transport et il ne doit pas être blessé, usé ou abimé par les contacts répétés avec les nombreux galets. Cette partie en élastomère, dénommée bandage, est réglementairement limitée en module pour ne pas blesser le câble.

Le bandage est rapporté autour du moyeu métallique du galet et maintenu en place par un système de fixation et de serrage mécanique.

Il est primordial de limiter ou de réduire autant que possible le nombre de galets d'une ligne de transport par câble. En effet, d'un point de vue économique, tout galet supplémentaire entraine deux sources de coûts majeures :
- le nombre de pylônes qui augmente à iso capacité de support d'un pylône (charge et nombre de galets par tête de pylône). Au-delà du coût, tout pylône supplémentaire induit également des contraintes d'implantation plus importantes;
- Le système de répartition de la charge entre tous les galets d'une tête de pylône est de plus en plus complexe et coûteux quand le nombre de galets augmente.

Ainsi, disposer d'un galet avec une capacité de charge supérieure permettrait de rendre plus efficaces et donc plus compétitifs les systèmes de transport aérien en comparaison aux systèmes classiques de transport de personnes au sol. L'élément limitant cette caractéristique est le bandage en caoutchouc qui assure le contact avec le câble et est donc écrasé par la charge à porter. Les bandages ont une durée de vie pouvant atteindre plusieurs années dans le cas d'une exploitation de montagne en particulier. Pour les lignes de transport urbain par câble, cette durée de vie peut être beaucoup plus courte du fait du rythme de l'exploitation quasi permanent et d'une large amplitude horaire quotidienne. Dans certains cas les plus sévères, la durée de vie d'un bandage n'est que de trois mois environ. Cela pénalise l'exploitant de la ligne de transport par deux aspects : la perte d'exploitation et de service à l'usager du fait des arrêts de maintenance, et le coût lié aux opérations de maintenance et d'achat de bandages.

Il existe donc un fort besoin pour un bandage pour galet de système de transport par câble qui puisse fournir une durée de vie supérieure à celle de bandages existants.

Parmi les solutions proposées à ce jour, aucune n'est véritablement performante.

Par exemple, le document FR2661865 décrit un bandage plein en matériau du type élastomère, muni d'un renfort en tissu. Les renforts sont agencés selon des profils complexes, rendant la fabrication du bandage particulièrement complexe et coûteuse.

Le document FR2106897 décrit un bandage plein comportant au moins une armature de renforcement annulaire. L'armature est fabriquée par enroulement, résultant en un ensemble non unitaire et sans adhésion entre les multiples enroulements voisins. La fabrication par enroulement est par ailleurs fastidieuse et coûteuse.

Pour pallier les différents inconvénients préalablement évoqués, l'invention prévoit différents moyens techniques.

### EXPOSE DE L'INVENTION

Tout d'abord, un premier objectif de l'invention consiste à prévoir un bandage pour galet de système de transport par câble dont la durée de vie est supérieure à celle des bandages actuels.

Un autre objectif de l'invention consiste à prévoir un bandage pouvant supporter une charge plus élevée que celle des bandages actuels.

Pour ce faire, l'invention prévoit un bandage plein en matériau élastomère pour galet de roulement de téléphérique ou télécabine, conforme à la revendication 1.

Cette architecture en deux parties permet de prévoir des éléments distincts, contribuant chacun de façon complémentaire à l'optimisation des performances mécaniques du bandage. Par monolithique, on entend un insert réalisé en une seule pièce, sans fils ou câbles de renfort, ni tissu.

En utilisation, le renfort offre une protection et contribue à améliorer la résistance du bandage, en servant d'interface avec la roue métallique. En fabrication, le renfort permet d'utiliser des techniques de moulage avantageuses et performantes.

De manière avantageuse, la largeur visible de l'insert annulaire est d'au moins 10 %, et plus préférentiellement au moins 25% et encore plus préférentiellement au moins 50% de la largeur de la face interne du bandage. Par largeur visible, on entend la portion située radialement intérieurement et formant la face interne du bandage, visible à l'oeil nu lorsque le bandage n'est pas monté sur une roue de galet.

Selon un mode de réalisation avantageux, l'épaisseur de l'insert annulaire est comprise entre 5% et 10% de l'épaisseur totale du bandage.

Selon encore un mode de réalisation avantageux, la largeur au point le plus large du renfort annulaire occupe au moins 90% et plus préférentiellement 100% de la largeur du bandage.

Le bandage plein préalablement décrit est avantageusement obtenu par moulage par compression transfert ou injection.

Ce procédé de mise en oeuvre permet de fabriquer des bandages de façon simple, rapide et peu coûteuse en particulier en comparaison avec une mise en forme par assemblage multicouche tel que dans l'art antérieur.

Selon un mode de réalisation avantageux, l'insert annulaire comprend un anneau central périphérique pourvu d'une pluralité d'ailettes latérales s'étendant latéralement de part et d'autres de l'anneau central.

Ce mode de réalisation permet d'utiliser un insert de largeur inférieure à celle du bandage, les ailettes permettant de bien positionner l'insert dans la cavité du moule avant moulage et vulcanisation.

Le matériau de l'insert annulaire comporte un module MA10 (à 10% d'allongement en traction uni-axiale) supérieur à 1000 MPA dans la direction circonférentielle du bandage. Ce module est de préférence au moins 100% et préférentiellement au moins 200% et encore plus préférentiellement 300% supérieur à celui du matériau du corps massif plein. Le module MA10 du matériau du corps plein est compris entre 5 et 15 MPA. Il peut être supérieur à ces valeurs mais n'excède pas 5000 MPA.

Un procédé de fabrication d'un bandage plein tel que préalablement décrit peut se faire par moulage par compression transfert ou injection dans un moule comprenant deux demi corps formant une cavité de forme correspondante au bandage à mouler, la cavité comprenant une paroi radialement intérieure, des parois latérales et une paroi radialement extérieure, ledit procédé comprenant les étapes consistant à :
i) disposer un insert annulaire contre la paroi radialement intérieure de la cavité du moule;
ii) fermer le moule et injecter dans la cavité de moulage une quantité de matériau élastomère à injecter correspondant au volume du bandage, de manière à remplir la cavité du moule;
iii) mettre en température et maintenir le temps correspondant à la réticulation de la partie élastomère du bandage ;
iv) ouvrir le moule et retirer le bandage réticulé.

Ce procédé permet de fabriquer des bandages avec une approche industrielle rigoureuse, fiable et économique. L'architecture du bandage avec une couche interne en matériau préalablement formé facilite la mise en place dans le moule du matériau qui sera injecté. Après réticulation, le démoulage du bandage est grandement facilité par la présence de l'anneau interne.

Selon un mode de réalisation avantageux, le moule comprend par ailleurs une zone d'approvisionnement en matériau à injecter par une pluralité de canaux d'acheminement agencés entre ladite zone d'approvisionnement et la cavité et un piston d'injection agencé en coopération avec la zone d'approvisionnement, le procédé comprenant par ailleurs une étape de transfert du matériau à injecter de la zone d'approvisionnement vers la cavité du moule par une action du piston sur ledit matériau.

### DESCRIPTION DES FIGURES

Tous les détails de réalisation sont donnés dans la description qui suit, complétée par les figures 1 à 7, présentées uniquement à des fins d'exemples non limitatifs, et dans lesquelles:
- la figure 1 est une représentation schématique d'un exemple de bandage en vue transversale ;
- la figure 2 est une coupe du bandage de la figure 1 ;
- la figure 3 est une représentation schématique d'un exemple de galet, comportant un bandage monté sur une roue, en vue transversale ;
- la figure 4 est une coupe du galet de la figure 3;
- la figure 5 est une représentation schématique illustrant un exemple d'installation pour produire un bandage par compression transfert avant injection du mélange à mouler;
- la figure 6 est une représentation schématique illustrant un exemple d'installation pour produire un bandage par compression transfert après injection du mélange à mouler;
- la figure 7 est un organigramme fonctionnel illustrant les principales étapes d'un exemple de procédé de moulage pour bandage.

### DESCRIPTION DETAILLEE DE L'INVENTION

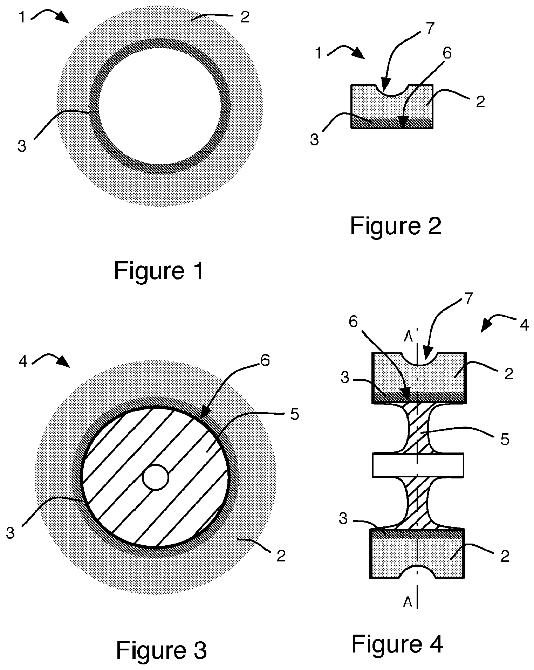

Les figures 1 à 4 illustrent un exemple de bandage et de galet. Les figures 1 et 2 illustrent un exemple de bandage seul. Le bandage comprend un corps 2 massif plein en matériau élastomère et un insert 3 annulaire de préférence monolithique, réalisé en matériau distinct de celui du corps massif. Tel qu'illustré aux figures 2 et 4, le bandage comporte une gorge formant une zone de roulement 7 du câble. La présence de cette zone favorise un roulement rectiligne et régulier, malgré les contraintes latérales telles que le vent qui peuvent tenter de déporter les cabines ou sièges du téléphérique et donc le câble sur un des bords de la surface de roulement du bandage.

Les figures 3 et 4 illustrent un exemple de galet 4, avec un bandage 1 monté sur une roue 5 dont la surface externe forme une surface de support 6 pour le bandage.

L'insert 3 annulaire est agencé radialement intérieurement au corps massif. Dans l'exemple des figures 1 et 2, l'insert a un profil transversal sensiblement rectangulaire, tel que montré aux figures 2 et 4. Dans cet exemple, il occupe la totalité de la zone radialement intérieure du bandage.

Le mélange élastomère à faible module du corps 2 massif, par exemple un mélange élastomère diénique, thermodurcissable ou thermoplastique, confère une surface de roulement favorisant la durabilité du câble de l'installation. Pour augmenter la capacité de charge du bandage et améliorer son endurance, l'ajout d'un insert 3 annulaire servant d'interface avec la face de support 6 de la roue 5 a démontré des résultats particulièrement avantageux tant en augmentation de la charge que de la durée de vie.

L'insert 3 est réalisé à l'aide d'un matériau différent de celui du corps rigide. Le matériau de l'insert a un module MA10 supérieur à 1000 MPA dans la direction circonférentielle du bandage.

Pour réaliser l'insert annulaire, on utilise par exemple un ou plusieurs des matériaux suivants :
- matériaux thermoplastiques : acrylonitrile butadiène styrène ABS polyoxyméthylène POM, polyméthylmétacrylate PMMA, polyamide PA, thermoplastique polyester (PET PBT), polycarbonate PC, polyarylsulfone PAS, polyphénylsulfone PPS, polyuréthane thermoplastique TPU, COPE à base de PET ou PEBA à base de PA ;
- matériaux thermodurcissables: matrice époxy et leurs dérivés (composite époxy), polyimide PI, système vulcanisé rigide (grande quantité de souffre) type bakélite, polyuréthane et ses dérivés, duroplast (type bakelite), résine polyester et ses dérivés, vinyl ester et ses dérivés.

Selon diverses variantes non illustrées, le profil transversal de l'insert annulaire est en forme de T ou de V ou de W, ou en forme de vague et/ou en deux ou trois parties agencées axialement côte à côte. D'autres variantes de profils sont encore possibles.

Dans un mode de réalisation spécifique, le bandage comprend un anneau central périphérique à partir duquel une pluralité d'ailettes latérales s'étendent radialement de part et d'autres de l'anneau central. Les ailettes se prolongent de préférence jusqu'à rejoindre le rebord axial externe du bandage plein.

Les ailettes procurent un excellent maintient de l'insert dans la cavité du moule avant injection ou transfert et assurent que l'insert reste bien en place pendant l'injection ou transfert.

### PROCEDE DE FABRICATION

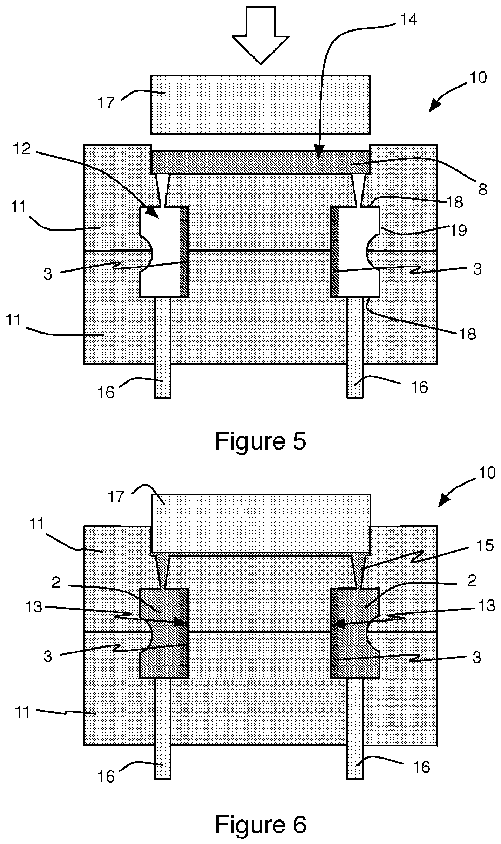

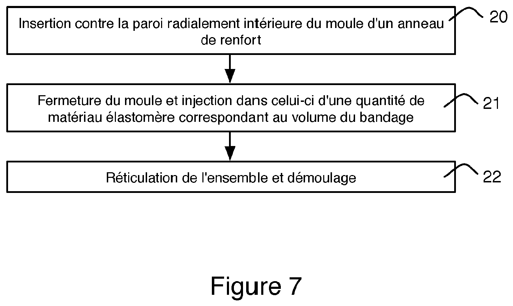

Les figures 5 et 6 illustrent un exemple de procédé de fabrication d'un bandage 1 plein tel que préalablement décrit. On utilise de préférence des techniques connues de moulage par injection ou par compression transfert. La figure 7 est un organigramme fonctionnel qui relate les principales étapes du procédé de fabrication des bandages par moulage.

Tel qu'illustré, un moule 10 comprend deux demi corps 11 formant une cavité 12 de forme correspondante au bandage 1 à mouler. La cavité 12 du moule est délimitée par une pluralité de parois, dont une paroi 13 radialement intérieure, des parois 18 latérales et une paroi 19 radialement extérieure.

L'exemple illustré comporte en outre les étapes de mise en oeuvre suivantes:
i) à l'étape 20, on dispose un insert 3 annulaire préalablement fabriqué contre la paroi 13 radialement intérieure de la cavité 12 du moule 10;
ii) à l'étape 21 on ferme le moule 10 et on injecte dans la cavité 12 de moulage une quantité de matériau 8 élastomère à injecter correspondant au volume du bandage, de manière à remplir la cavité 12 du moule ;
iii) à l'étape 22, on procède à une mise en température (au moins à la température de réticulation) et au maintien à cette température le temps correspondant à la réticulation de la partie élastomère du bandage;
iv) en fin de cycle, on ouvre le moule et retire le bandage réticulé.

Ce procédé est simple à mettre en oeuvre et permet de produire à des coûts avantageux de bandages avec un niveau de qualité élevé et stable dans la durée

L'insert annulaire est avantageusement réalisé par moulage. Dans l'exemple de réalisation illustré aux figures 5 et 6, avec un insert couvrant la totalité de la face interne du bandage, le démoulage est grandement facilité.

Tel qu'illustré aux exemples des figures 5 et 6 montrant de façon schématique une fabrication par compression transfert, le moule 10 comprend au moins une zone 14 d'approvisionnement en matériau 8 à injecter par une pluralité de canaux 15 d'acheminement répartis à la périphérie de la cavité, entre ladite zone 14 d'approvisionnement et la cavité 12. Au moins un piston 17 d'injection est agencé en coopération avec la zone d'approvisionnement.

Le procédé de compression transfert prévoit une étape de transfert du matériau 8 à injecter de la zone 14 d'approvisionnement vers la cavité 12 du moule par une action du piston 17 sur ledit matériau.

**Numéros de référence employés sur les figures**

| | |
|---|---|
| 1 | Bandage plein |
| 2 | Corps massif |
| 3 | Insert annulaire radialement interne |
| 4 | Galet |
| 5 | Roue |
| 6 | Support de bandage |
| 7 | Zone de roulement de câble |
| 8 | Matériau élastomère à injecter |
| 9 | Couche interne de matériau élastomère |
| 10 | Moule pour moulage par compression transfert |
| 11 | Demi-corps |
| 12 | Cavité de moulage |
| 13 | Paroi radialement intérieure |
| 14 | Zone d'approvisionnement en matériau à injecter |
| 15 | Canaux d'acheminement |
| 16 | Canaux d'évacuation d'air |
| 17 | Presse |
| 18 | Parois latérales |
| 19 | Paroi radialement extérieure |

## Revendications

1. Bandage (1) plein en matériau élastomère pour galet (4) de roulement de téléphérique ou télécabine, comprenant un corps (2) massif en matériau élastomère et au moins un insert (3) annulaire monolithique, réalisé en matériau distinct de celui du corps massif, l'insert (3) étant agencé radialement intérieurement au corps (2) massif et formant au moins une portion de la surface interne du bandage, **caractérisé en ce que** le module MA10 du matériau du corps massif est compris entre 5 et 15 MPA et le matériau de l'insert annulaire comporte un module MA10 supérieur à 1000 MPA dans la direction circonférentielle du bandage.

2. Bandage (1) selon la revendication 1, dans lequel la largeur visible de l'insert (3) annulaire est d'au moins 10 % et préférentiellement au moins 25% et encore plus préférentiellement au moins 50% de la largeur de la face interne du bandage.

3. Bandage (1) plein selon l'une des revendications 1 ou 2, dans lequel l'épaisseur de l'insert annulaire est comprise entre 5% et 10% de l'épaisseur totale du bandage.

4. Bandage (1) plein selon l'une quelconque des revendications 1 à 3, dans lequel la largeur au point le plus large du renfort annulaire occupe au moins 90% et plus préférentiellement 100% de la largeur du bandage.

5. Bandage (1) plein selon l'une quelconque des revendications précédentes, obtenu par moulage par compression transfert ou injection.

6. Bandage (1) plein selon l'une quelconque des revendications précédentes, dans lequel l'insert annulaire (3) comprend un anneau central périphérique pourvu d'une pluralité d'ailettes latérales s'étendant latéralement de part et d'autre de l'anneau central.

## Patentansprüche

1. Vollreifen (1) aus elastomerem Material für eine Laufrolle (4) einer Seilbahn oder Gondelbahn, der einen massiven Körper (2) aus elastomerem Material und mindestens einen ringförmigen monolithischen Einsatz (3), der aus Material realisiert ist, das von dem des massiven Körpers unterschiedlich ist, umfasst, wobei der Einsatz (3) radial innerhalb des massiven Körpers (2) eingerichtet ist und mindestens einen Abschnitt der Innenoberfläche des Reifens bildet, **dadurch gekennzeichnet, dass** der Modul MA10 des Materials des massiven Körpers zwischen 5 und 15 MPA liegt und das Material des ringförmigen Einsatzes einen Modul MA10 von größer 1000 MPA in der Umfangsrichtung des Reifens aufweist.

2. Reifen (1) nach Anspruch 1, wobei die sichtbare Breite des ringförmigen Einsatzes (3) mindestens 10 % und bevorzugt mindestens 25 % und noch bevorzugter mindestens 50 % der Breite der Innenfläche des Reifens ausmacht.

3. Vollreifen (1) nach einem der Ansprüche 1 oder 2, wobei die Dicke des ringförmigen Einsatzes zwischen 5 % und 10 % der Gesamtdicke des Reifens ausmacht.

4. Vollreifen (1) nach einem der Ansprüche 1 bis 3, wobei die Breite an der breitesten Stelle der ringförmigen Verstärkung mindestens 90 % und bevorzugter 100 % der Breite des Reifens ausmacht.

5. Vollreifen (1) nach einem der vorstehenden Ansprüche, der durch Transferpressen oder Spritzgießen erhalten wird.

6. Vollreifen (1) nach einem der vorstehenden Ansprüche, wobei der ringförmige Einsatz (3) einen umlaufenden zentralen Ring umfasst, der mit einer Vielzahl seitlicher Rippen versehen ist, die sich seitlich zu beiden Seiten des zentralen Rings erstrecken.

## Claims

1. Solid tyre (1) made of elastomer material for a roller (4) of an aerial tramway or gondola lift, comprising a solid body (2) made of elastomer material and at least one integral annular insert (3) made of a different material from that of the solid body, the insert (3) being arranged radially inside the solid body (2) and forming at least a portion of the internal surface of the tyre, **characterized in that** the modulus MA10 of the material of the solid body is between 5 and 15 MPa and the material of the annular insert has a modulus MA10 greater than 1000 MPa in the circumferential direction of the tyre.

2. Tyre (1) according to Claim 1, wherein the visible width of the annular insert (3) is at least 10% and preferably at least 25% and even more preferably at least 50% of the width of the internal face of the tyre.

3. Solid tyre (1) according to either of Claims 1 and 2, wherein the thickness of the annular insert is between 5% and 10% of the total thickness of the tyre.

4. Solid tyre (1) according to any one of Claims 1 to 3, wherein the width at the widest point of the annular reinforcer takes up at least 90% and more preferably 100% of the width of the tyre.

5. Solid tyre (1) according to any one of the preceding claims, which is obtained by compression transfer moulding or injection moulding.

6. Solid tyre (1) according to any one of the preceding claims, wherein the annular insert (3) comprises a peripheral central ring provided with a plurality of lateral fins extending laterally on either side of the central ring.
